# EUROPEAN PATENT APPLICATION

(11) **EP 4 289 632 A1**
(43) Date of publication of application: **13.12.2023**
(21) Application number: 22183524.2
(22) Date of filing: 07.07.2022
(51) Int. Cl.: B60C 1/00, C08L 9/06

(54) **METHOD FOR PRODUCING A RUBBER COMPOSITION USING PRETREATED FILLER**

(30) Priority: 09.06.2022 FR 2205569
(71) Applicant: Continental Reifen Deutschland GmbH, 30165 Hannover (DE); University Of Twente, 7522 NB Enschede (NL); Technische Universiteit Delft, 2628 CN Delft (NL)
(72) Inventor: COURTOIS, Nicolas, 30165 Hannover (DE); RECKER, Carla, 30165 Hannover (DE); DAVIN, Julien, 30165 Hannover (DE); LA ZARA, Damiano, 2018 Antwerp (BE); VAN OMMEN, Jan Rudolf, 2629 HZ Delft (NL); KIM, Sunkeun, 7512 AD Enschede (NL); DIERKES, Wilma, 7522 KR Enschede (NL)
(74) Representative: Pelster Behrends Patentanwälte PartG mbB

(57) **Abstract**

The invention relates to a method for producing a sulfur-crosslinkable rubber composition, the method comprising the step of: a) producing or providing amorphous silicon dioxide, at least one of the steps of: b1) modifying the surface of the amorphous silicon dioxide by contacting the amorphous silicon dioxide with a first vapor phase comprising a first reactant for obtaining an intermediate filler, and modifying the surface of the intermediate filler by subsequently contacting the intermediate filler with a vapor phase comprising a second reactant for obtaining a pretreated filler, and/or b2) modifying the surface of the amorphous silicon dioxide by contacting the amorphous silicon dioxide with a third vapor phase comprising a third reactant for obtaining a pretreated filler, and the step of: c) mixing the pretreated filler with one or more diene rubber compounds for obtaining the sulfur-crosslinkable rubber composition, wherein the reactants are specifically selected.

## Description

The present invention relates to a method for producing a sulfur-crosslinkable rubber composition and a corresponding method for producing a rubber product from this sulfur-crosslinkable rubber composition, as well as the respective sulfur-crosslinkable rubber composition and the rubber product obtainable therefrom. Also disclosed herein are a method for producing a pretreated filler for use in sulfur-crosslinkable rubber compositions, the respective pretreated filler, the use of such pretreated filler in sulfur-crosslinkable rubber compositions for increasing the performance properties of rubber products as well as a reactor for use in the corresponding methods.

Since the start of the twenty-first century, the automotive industry is one of the industrial branches that is facing the most fundamental challenges and is experiencing several disruptive technological advances. The growing customer awareness for ecological aspects like emission profiles or resource efficiency requires new concepts for mobility. At the same time, there is an ever-increasing demand for improved performance characteristics of vehicles as well as overall stricter regulations with respect to safety. Meeting these challenges is not only a task for vehicle manufacturers. In fact, several of these aspects are heavily influenced by the properties of the vehicle tires, making the optimization of tire properties a key objective.

Several relevant properties of pneumatic vehicle tires, e.g. rolling resistance and wet grip, are closely linked to the rubber compound of the tread and therefore to the sulfur-crosslinkable rubber composition that was used for producing the respective rubber. Unfortunately, a lot of different physical-chemical properties of vulcanized rubber compositions that are relevant for the running properties of tires cannot be altered independently of each other, resulting in trade-offs, wherein one property cannot be enhanced without adversely affecting another relevant property. For instance, an improvement in wet grip and dry breaking generally entails deterioration in rolling resistance, winter properties and abrasion characteristics. In consequence, the optimization of rubber compositions is oftentimes about resolving the trade-offs by developing solutions for increasing specific parameters without hampering the respective complementary properties too severely.

Therefore, a lot of research effort is focused on optimizing the properties of the rubber compositions and the resulting rubber products, wherein significant progress was made in recent years, e.g. by the replacement of carbon black filler with silica, in particular precipitated silica, i.e. amorphous silicon dioxide. It was found that particularly favorable properties can be obtained if silicon-containing compounds are chemically modified on their surface by so-called organo-silanization, which is also referred to as organosilylation. For this purpose, the silicon-containing compounds are reacted with organyloxysilylorganic-compounds, i.e. with organic compounds which have at least one C-O-Si bond and at least one organic group attached to the silicon by an Si-C bond. By means of a chemical reaction, which is usually a condensation reaction, a surface modification of the silicon-containing compound with the organic residue of the organyloxysilylorganic compounds is achieved. The compatibility of the fillers in the rubber composition and the interactions with the rubber can be specifically influenced by this organic residue. In many cases it is preferred that the organic residues carry functional groups which can crosslink with the rubber during vulcanization and thus increase the degree of crosslinking in the cured rubber compound. Additional background is disclosed, for example, in DE 2536674 B2 or DE 2255577 B2.

In the tire industry, the organo-silanization, i.e. the modification of the silicon-containing compounds with the organyloxysilylorganic compounds, usually is performed by means of an in situ reaction in the mixer. This means that the components, for example silica and a free silane with an organic group, are reacted with each other in the mixer and in the presence of other typical components of a rubber composition, e.g. the rubber compounds. However, this process is oftentimes perceived as disadvantageous, since combustible and potentially harmful gases, such as ethanol, can be released in the process, which is regularly undesirable in rubber processing. In addition, in most cases a separate mixing step is required, which increases the time and energy required for the process. Furthermore, the corresponding process is comparatively difficult to control, since i) the reaction takes place in situ in a large volume and in the presence of other substances that reduce the effective concentration of the starting materials of the organo-silanization, ii) undesired reaction products such as ethanol have to be removed during the process in order to avoid an undesired incorporation of these compounds into the rubber matrix, and iii) the degree of organo-silanization, i.e. the success of the intended in situ reaction, is oftentimes difficult to analyze.

For this reason, there is the approach in the prior art of modifying the silicon-containing compounds by organo-silanization in advance, i.e. before the addition to the rubber composition. The idea is, that the pretreated fillers can be obtained with a comparably well-defined degree of silanization and subsequently added to the rubber mixture without volatile organic substances being formed in the mixer as a result.

Today, this upstream organo-silanization is typically carried out in a wet-chemical process, i.e. using solvents, in a comparatively lengthy process. An exemplary process is e.g. disclosed in US 2005176852 A1. After the wet-chemical reaction, the organo-silanized compounds produced in this way must be separated from the liquid reaction medium for the purpose of purification and then dried, for which typically not only elevated temperatures but also reduced pressures are required. As a result, the energy and time efficiency of the process is oftentimes considered to be disadvantageous. Furthermore, in experiments of the inventors it was found that the pretreated fillers of the prior art that are obtained in a wet-chemical process do not show an optimal behavior in several sulfur-crosslinkable rubber compositions that are used in the tire industry, when compared to the in situ modification. Insofar the inventors found that such pretreated fillers of the prior art can make the processing of several sulfur-crosslinkable rubber compositions very difficult, e.g. by leading to an increase in undesirable scorch as well as a significant loss of processability due to an increase in viscosity. Furthermore, an increase in Shore A hardness of about 40 to 50 % and an increase in the elastic modulus of about 300 to 650 % was observed. Combined with an adverse effect on the indicator for rolling resistance (Reb. 70 °C) and breaking (Tan d 0 °C), the inventors found that the respective sulfur-crosslinkable rubber compositions were not advantageous for a broad variety of tire applications and/or could be used in limited quantities only.

It was the primary objective of the present invention to overcome or at least reduce the disadvantages of the prior art and to provide an improved method for producing a sulfur-crosslinkable rubber composition and a corresponding sulfur-crosslinkable rubber composition.

Insofar, there was a long-felt need to provide a sulfur-crosslinkable rubber composition that after vulcanization exhibits excellent performance properties, in particular in the trade-off between rolling resistance and wet grip.

It was an additional objective of the present invention that the sulfur-crosslinkable rubber composition should have a similar or even better processability than sulfur-crosslinkable rubber compositions that rely on in situ modification of silica, in particular with respect to scorch behavior and a favorable viscosity.

Furthermore, it was an objective of the present invention that the sulfur-crosslinkable rubber composition after vulcanization should have similar mechanical properties than sulfur-crosslinkable rubber compositions that rely on in situ modification of silica, in particular with respect to the elastic modulus and the hardness.

With respect to pretreated fillers of the prior art, it was an objective of the present invention that the sulfur-crosslinkable rubber composition should exhibit improved processability and should result in a vulcanized rubber compound that is advantageous with respect to the trade-off between rolling resistance and wet grip and has mechanical properties that make it suitable for use in tire applications.

Insofar, it was an objective of the present invention to provide a sulfur-crosslinkable rubber composition that exhibits excellent filler affinity between the rubber compound and the filler used in the sulfur-crosslinkable rubber composition.

In view of the above objectives, it was an additional objective of the present invention to provide an improved method for producing a rubber product as well as the respective rubber product, in particular tires.

It was a secondary objective of the present invention to provide a method for producing a pretreated filler for use in sulfur-crosslinkable rubber compositions as well as the corresponding pretreated filler and their use in sulfur-crosslinkable rubber compositions.

From the prior art, several different concepts of coating generic particles with different kinds of coatings and or surface modification are known, as e.g. methods disclosed in EP 2403976 B1, EP 24111136 B1, US 9570734 B2. One of these techniques is the so-called molecular layer deposition (MLD), that is e.g. disclosed in more detail in EP 3261623 B1.

The inventors of the present invention have now found that the above-described objectives can surprisingly be achieved, if a specific type of MLD using specific reactants is used to modify amorphous silicon dioxide to obtain a pretreated filler that is afterwards mixed with at least one diene rubber compound as defined in the claims.

Therefore, the above-described objectives are solved by the subject-matter of the present invention as defined in the claims. Hereinafter, the subject-matter of the invention is discussed in more detail, wherein preferred embodiments of the invention are disclosed.

It is particularly preferred to combine two or more of the preferred embodiments to obtain an especially preferred embodiment. Correspondingly, especially preferred is a method according to the invention, that defines two or more features of preferred embodiments of the present invention. Also preferred are embodiments in which a feature of one embodiment that is to some extent designated as preferred is combined with one or more further features of other embodiments that are designated to some extent as preferred.

Features of preferred sulfur-crosslinkable rubber compositions, rubber products, pretreated filler and uses result from features of preferred methods.

Insofar as both specific quantities or ratios of an element as well as preferred version of the element are disclosed hereinafter, the specific quantities or ratios of the preferred elements are also disclosed. In addition, it is disclosed that within the corresponding specific total amounts or total ratios of the elements, at least some of the elements can be preferred elements and, in particular, that preferred elements within the specific total amounts or total ratios can be present in the respective specific quantities or ratios.

The unit "phr" as used herein denotes "parts per hundred parts of rubber by weight" and is the standard unit used in the rubber industry to define the amounts of different components in a rubber composition. The respective amounts are given as parts by weight of the substance relative to the total mass of all high molecular weight rubbers present in the mixture that are solid at ambient conditions and constitute 100 phr.

Within the framework of the present invention, the term "boiling point" refers to the atmospheric boiling point of a compound, that is the boiling point at a pressure of 101.3 kPa.

The invention relates to a method for producing a sulfur-crosslinkable rubber composition, the method comprising the step of:
a) producing or providing amorphous silicon dioxide,
at least one of the steps of:
   b1) modifying the surface of the amorphous silicon dioxide by contacting the amorphous silicon dioxide with a first vapor phase comprising a first reactant for obtaining an intermediate filler, and modifying the surface of the intermediate filler by subsequently contacting the intermediate filler with a vapor phase comprising a second reactant for obtaining a pretreated filler, and/or
   b2) modifying the surface of the amorphous silicon dioxide by contacting the amorphous silicon dioxide with a third vapor phase comprising a third reactant for obtaining a pretreated filler,
and the step of:
   c) mixing the pretreated filler with one or more diene rubber compounds for obtaining the sulfur-crosslinkable rubber composition,
   wherein the first reactant is selected from the group consisting of compounds of formula I) with a boiling point of 300 °C or less:

      I) (R¹R²R³) Si - R⁴ - SH,
   wherein R¹, R² and R³ are independently of each other linear or branched alkoxy groups or alkyl groups having 1 to 10 carbon atoms, wherein at least one of R¹, R² and R³ is an alkoxy group, wherein R⁴ is a linear or branched alkyl chain having 1 to 20 carbon atoms, wherein the second reactant is selected from the group consisting of organic compounds with a boiling point of 300 °C or less that are capable of forming a blocked mercapto group with the first reactant, and wherein the third reactant is selected from the group consisting of organic compounds with a boiling point of 300 °C or less that are obtainable by reacting the first reactant with the second reactant by forming a blocked mercapto group.

The term "sulfur-crosslinkable" is well known to the skilled person and defines that the rubber composition of the present invention can be cured in the presence of sulfur, wherein the separate chains of the rubber compound are crosslinked, i.e. interconnected, to obtain a cured rubber composition, i.e. sulfur-vulcanized rubber composition. This process is known as vulcanization and the obtained product can be used to produce a broad variety of rubber products, in particular tires.

In the method according to the invention amorphous silicon dioxide is provided as a starting material. Preferred is a method according to the invention, wherein the amorphous silicon dioxide has a specific surface area measured by cetyl trimethyl-ammonium bromide (CTAB) adsorption according to ISO 5794-1G:2010 in the range of 60 to 350 m²/g, preferably in the range of 80 to 250 m²/g, more preferably in the range of 110 to 220 m²/g as such compounds result in excellent properties of the sulfur-vulcanized rubber composition and the corresponding rubber compound, respectively. Especially preferred is a method according to the invention, wherein the amorphous silicon dioxide is precipitated silica, as the use of precipitated silica.

In the next step, the amorphous silicon dioxide is functionalized by contacting it with a vapor phase. The skilled person understands that the above-described steps correspond to MLD-processes and that the invention therefore relates to a method according to the invention, wherein the modification in steps b1) and/or b2) is made by means of molecular layer deposition.

The modification can be made either in a two stage process according to step b1), that is using a first reactant to modify the surface and later on a second reactant to react with the first reactant, or in a one stage process according to step b2), in that the surface modification is obtained directly with the reaction product of the first and second reactant that is used as a third reactant.

In principle, it is possible to apply both steps b1) and b2), either subsequently or in parallel. However, for a specific modification typically only one of the two approaches would be chosen, mostly depending on the usability of typical MLD-conditions to directly modify the silicon dioxide with the reaction product of the first reactant with the second reactant, that is a molecule having a blocked mercapto group. In several cases, the reaction product of the first reactant with the second reactant might tend to have a higher boiling point than required or might be more difficult to obtain in a high purity. Therefore, a combination of both steps would be more typical in case two different modifications shall be employed, e.g. one that can readily be performed in the one stage process and another modification for that the two stage process is more suitable.

The two stage process has the advantage that the first and second reactant individually are smaller molecules than the third reactant that would be rived from these two components. Therefore, the two stage process beneficially increases the range of compounds that can be used to modify the pretreated filler. Therefore, the two stage process is especially preferred. Correspondingly, explicitly preferred is a method according to the invention, the method comprising the steps of:
a) producing or providing amorphous silicon dioxide,
b1a) modifying the surface of the amorphous silicon dioxide by contacting the amorphous silicon dioxide with a first vapor phase comprising a first reactant for obtaining an intermediate filler,
b1b) modifying the surface of the intermediate filler by contacting the intermediate filler with a vapor phase comprising a second reactant for obtaining a pretreated filler,
c) mixing the pretreated filler with one or more diene rubber compounds for obtaining the sulfur-crosslinkable rubber composition,
wherein the first reactant is selected from the group consisting of compounds of formula I) with a boiling point of 300 °C or less:

   I) (R¹R²R³) Si - R⁴ - SH,
wherein R¹, R² and R³ are independently of each other linear or branched alkoxy groups or alkyl groups having 1 to 10 carbon atoms, wherein at least one of R¹, R² and R³ is an alkoxy group, wherein R⁴ is a linear or branched alkyl chain having 1 to 20 carbon atoms, wherein the second reactant is selected from the group consisting of organic compounds with a boiling point of 300 °C or less that are capable of forming a blocked mercapto group with the first reactant, wherein the second reactant is preferably selected from the group consisting of acyl halides, carboxylic acids and carboxylic acid anhydrides.

In other words, a method according to the invention is preferred, wherein the method comprises step b1).

The first reactant according to formula I) comprises two main functional groups that are linked via a linker R⁴. The first functional group comprises a silicon atom and at least one alkoxy group that can be used to link the first reactant to the silicon dioxide by means of a condensation reaction with an Si-OH Group. The two remaining substituents on the silicon atom can be either alkoxy groups or alkyl groups, that are bound to the silicon with a Si-C bond, wherein it is preferred if all of R¹, R² and R³ are alkoxy groups. Both the alkoxy and the alkyl groups can be either linear or branched and comprise 1 to 10 carbon atoms. The second functional group is a thiol group, that is used for linking the first reactant to the second reactant by forming a protected mercapto group, e.g. a thioester, and that provides the required reactivity of the modified filler with the sulfur-crosslinkable rubber compound in the rubber composition during vulcanization. Preferred is a method according to the invention, wherein in formula I) R¹, R² and R³ are independently of each other linear or branched alkoxy groups having 1 to 5, preferably 2 to 3, carbon atoms, wherein R¹, R² and R³ are preferably linear alkoxy groups, and/or wherein R¹, R² and R³ are preferably identical, and/or wherein in formula I) R⁴ is a linear or branched alkyl chain having 1 to 10, preferably 2 to 3, carbon atoms. Especially preferred is a method according to the invention, wherein the first reactant is selected from the group consisting of 3-Mercaptopropyl-triethoxysilane and Mercaptopropyl-trimethoxysilane, wherein the first reactant preferably is 3-Mercaptopropyl-triethoxysilane.

The second reactant comprises a functional group that is capable of forming a blocked mercapto group, e.g. a thioester, with the thiol, and e.g. comprises a reactive carbonyl group, and is used to block the thiol group of the first reactant in order to improve the processability in the rubber composition and to prevent scorch, wherein the blocking can potentially be removed in the rubber composition by means of deblocking agents. The corresponding concept of blocked mercapto groups ist known to the person skilled in the art, wherein further information can e.g. be found in EP 2094741A2. Especially preferred is a method according to the invention, wherein the second reactant is selected from the group consisting of acyl halides, carboxylic acids and carboxylic acid anhydrides. Insofar, preferred is a method according to the invention, wherein the second reactant is selected from the group consisting of acyl halides and carboxylic acids of the formula II):

II) R⁵ - (C=O) - Y,

wherein R⁵ is a linear or branched, preferably linear, alkyl group having 1 to 20, preferably 2 to 16, more preferably 3 to 12, most preferably 4 to 8, carbon atoms, and wherein Y is selected from the group of halides and hydroxy, preferably chlorine and bromine, more preferably chlorine. Exemplary is a method according to the invention, wherein the second reactant is selected from the group consisting of heptanoic acid and octanoic acid. Especially preferred is a method according to the invention, wherein the second reactant is selected from the group consisting of acyl halides, preferably acyl chlorides. Even more preferred is a method according to the invention, wherein the second reactant is selected from the group consisting of pentanoyl halides, hexanoyl halides, heptanoyl halides, octanoyl halides and decanoyl halides, preferably selected from the group consisting of pentanoyl chloride, hexanoyl chloride, heptanoyl chloride, octanoyl chloride and decanoyl chloride, wherein the second reactant preferably is octanoyl chloride.

Correspondingly, the third reactant preferably is an organic compound having the formula III):

III) (R¹R²R³) Si - R⁴ - S - (C=O) - R⁵,

wherein R¹, R² and R³ are independently of each other linear or branched alkoxy groups or alkyl groups having 1 to 10 carbon atoms, wherein at least one of R¹, R² and R³ is an alkoxy group, wherein R⁴ is a linear or branched alkyl chain having 1 to 20 carbon atoms, wherein R⁵ is a linear or branched, preferably linear, alkyl group having 1 to 20, preferably 2 to 16, more preferably 3 to 12, most preferably 4 to 8, carbon atoms, wherein the preferred embodiments are derived from the respective disclosure regarding the first and/or second reactant.

In order to allow for a method that is particularly energy efficient, it is preferred to choose reactants with a lower boiling point. Thus, preferred is a method according to the invention, wherein the first reactant is selected from the group consisting of compounds of formula I) with a boiling point of 270 °C or less, preferably of 250 °C or less, more preferably of 230 °C or less, and/or wherein the second reactant is selected from the group consisting of acyl halides, carboxylic acids and carboxylic acid anhydrides with a boiling point of 270 °C or less, preferably of 250 °C or less, more preferably of 230 °C or less, and/or wherein the third reactant is selected from the group consisting of compounds with a boiling point of 270 °C or less, preferably of 250 °C or less, more preferably of 230 °C or less, that are obtainable by reacting the first reactant with the second reactant. Herein it is preferred, to choose the same limits for all reactants.

Advantageously, the method according to the invention can be used to simultaneously modify the silicon dioxide with different first reactants or to block the resulting functionalities with different blocking groups. The respective pretreated filler is interesting for rubber compositions for specialized applications. For this, a method according to the invention is preferred, wherein the first vapor phase comprises two or more first reactants, and/or wherein the second vapor phase comprises two or more second reactants and/or wherein the third vapor phase comprises two or more third reactants.

Relevant for almost all embodiments is a method according to the invention, wherein steps b1) and/or b2) are conducted in a reactor, preferably a fluidized bed reactor.

Exemplary for a laboratory scale experiment is a method according to the invention, wherein the reactor comprises a glass column, preferably a glass column with a conical shape, more preferably with an angle of the conical slide in the range between 20° to 25°.

The vapors comprising the respective reactants can efficiently be obtained from the respective liquid reactant materials by means of a bubbler, that is a vessel that can be heated and comprises at least one outlet for a vapor phase. Insofar, the inventors identified expedient process parameters for the bubblers. Thus, preferred is a method according to the invention, wherein the first vapor phase is provided by a first bubbler comprising a first liquid phase comprising the first reactant, wherein the first vapor phase is preferably provided by heating the first liquid phase in the first bubbler, preferably to a temperature in the range of 80 to 140 °C, preferably in the range of 100 to 120 °C, and/or wherein the second vapor phase is provided by a second bubbler comprising a second liquid phase comprising the second reactant, wherein the second vapor phase is preferably provided by heating the second liquid phase in the second bubbler, preferably to a temperature in the range of 60 to 200 °C, preferably in the range of 80 to 160 °C, more preferably in the range of 100 to 120 °C, and/or wherein the third vapor phase is provided by a third bubbler comprising a third liquid phase comprising the third reactant, wherein the third vapor phase is preferably provided by heating the third liquid phase in the first bubbler, preferably to a temperature in the range of 120 to 300 °C, preferably in the range of 160 to 250 °C.

In particular, a method according to the invention is preferred, wherein the first vapor phase, and/or the second vapor phase and/or the third vapor phase, is provided by heating the liquid phase of the respective reactant in the respective bubbler to a temperature in the range of (Z-130 °C) to Z, wherein Z is the boiling point of the respective reactant in °C.

In most cases it is expedient to use a carrier gas for transporting the vapor of the respective reactant to the silicon dioxide and the reactor. By employing a carrier gas, lower temperatures can be used for the bubbler as the transport does not have to be facilitated entirely by the vapor pressure generated by evaporating the reactant, enabling the use of temperatures that are below the boiling point of the reactants. Furthermore, lower concentrations of the reactant in the vapor phase that is contacting the silicon dioxide are possible, thereby improving the controllability of the process and allowing for a more precise control of the degree of functionalization. Therefore, a method according to the invention is preferred, wherein the first vapor phase and/or the second vapor phase and/or the third vapor phase, preferably all vapor phases, comprise a carrier gas, preferably an inert carrier gas, more preferably nitrogen or a noble gas. Insofar, a method according to the invention is preferred, wherein a carrier gas, preferably nitrogen, is used to provide the first vapor phase and/or the second vapor phase and/or the third vapor phase to the reactor, wherein the carrier gas is preferably passed through the first liquid phase or the second liquid phase or the third liquid phase, respectively, wherein for example a flow rate in the range of 0.5 to 4 L/min, preferably in the range of 1 to 3 L/min, can be used for a typical laboratory scale experiment, wherein the skilled person adjusts these ranges in view of the reactor setup.

In order to avoid unwanted condensation of the reactant materials in the reactor or on their way to the reactor, it is beneficial to employ a heating to these components of the reactor, wherein the increased temperature in the reactor synergistically is beneficial for the reactions in modification steps b1) and/or b2). Preferred is therefore a method according to the invention, wherein during steps b1) and/or b2), the reactor is heated to a temperature in the range of 150 to 300 °C, preferably in the range of 175 to 250 °C. Additionally or alternatively preferred is a method according to the invention, wherein the first vapor phase and/or the second vapor phase and/or the third vapor phase, are provided to the reactor through lines, wherein the lines are preferably heated to a temperature in the range of 80 to 220 °C, preferably in the range of 100 to 180 °C. In a typical laboratory scale experiment, the temperature control can for example be made by means of IR radiation, for example by means of an IR-lamp, wherein larger processes will most likely rely on other temperature units that are familiar to the skilled person.

One important method of controlling the degree of functionalization of the silicon dioxide is to adjust the time of exposure, e.g. the time of contacting the silicon dioxide with the respective vapor phase. Insofar, the inventors identified suitable ranges for each reactant. Preferred is a method according to the invention, wherein the contacting with the first reactant in step b1) is made for a time in the range of 30 to 240 min, preferably in the range of 60 to 180 min, more preferably in the range of 90 to 150 min, and/or wherein the contacting with the second reactant in step b1) is made for a time in the range of 1 to 120 min, preferably in the range of 5 to 60 min, more preferably in the range of 10 to 40 min, and/or wherein the contacting with the third reactant in step b2) is made for a time in the range of 1 to 240 min, preferably in the range of 5 to 180 min, more preferably in the range of 10 to 150 min.

Preferred is a method according to the invention, wherein after the contacting with the first reactant in step b1) and/or the contacting with the second reactant in step b1) and/or after step b2), the lines and/or the reactor are purged with the carrier gas, preferably nitrogen, more preferably for a time in the range of 1 to 120 min, most preferably in the range of 5 to 60 min, particular preferably in the range of 15 to 45 min.

In step c) of the method according to the invention, the pretreated filler obtained in step b1) and/or b2) is mixed with one or more rubber compounds in order to obtain the sulfur-crosslinkable rubber composition, wherein the mixing can be performed using typical equipment, like e.g. an internal mixer.

The term "diene rubber" as used herein refers to rubbers that arise through polymerization or copolymerization of dienes and/or cycloalkenes and that therefore comprise carbon-carbon double bonds. Exemplary is a method according to the invention, wherein the one or more diene rubber compound is selected from the group consisting of natural polyisoprene, synthetic polyisoprene, butadiene rubber, solution-polymerized styrene-butadiene rubber, emulsion-polymerized styrene-butadiene rubber, halobutyl rubber, polynorbornene, isoprene-isobutylene copolymer, ethylene-propylene-diene rubber, nitrile butadiene rubber, chloroprene rubber and isoprene-butadiene, preferably selected from the group consisting of natural polyisoprene, synthetic polyisoprene, butadiene rubber, solution-polymerized styrene-butadiene rubber, emulsion-polymerized styrene-butadiene rubber, more preferably selected from the group consisting of natural polyisoprene, butadiene rubber and solution-polymerized styrene-butadiene rubber. For specific applications a method according to the invention is preferred, wherein the one or more diene rubber compound is selected from the group consisting of functionalized diene rubber, for example end chain functionalized diene rubber.

In agreement with the understanding of the skilled person the term "one or more diene rubber compound" is not construed as referring to the number of molecules of said rubber compound. Instead, the skilled person understands that a rubber composition that comprises two diene rubber compounds comprises several molecules of each of the rubber compounds, e.g. of butadiene rubber and natural polyisoprene.

Depending on the desired application of the resulting rubber product, it can be expedient to optimize the properties of the rubber product by employing two, three or even more different diene rubber compounds. In view of this, a method according to the invention is preferred, wherein in step c) the pretreated filler is mixed with two or more, preferably three or more, diene rubber compounds. In particular, a method according to the invention is preferred, wherein in step c) the pretreated filler is mixed with one to five, preferably one to three, more preferably two or three, diene rubber compounds. Correspondingly, a method according to the invention is preferred, wherein the sulfur-crosslinkable rubber composition comprises two or more, preferably three or more, diene rubber compounds and/or wherein the sulfur-crosslinkable rubber composition comprises one to five, preferably one to three, more preferably two or three, diene rubber compounds.

For some applications a method according to the invention is preferred, wherein the sulfur-crosslinkable rubber composition comprises solution-polymerized styrene-butadiene rubber in an amount of 50 phr or more, more preferably 70 phr or more, and/or wherein the sulfur-crosslinkable rubber composition comprises butadiene rubber in an amount in the range of 5 to 45 phr, preferably in the range of 10 to 25 phr.

For some applications it can be beneficial to include natural rubber, either as a minor component or, potentially in combination with synthetic polyisoprene, as a main component, for example in truck tread applications. Insofar, it is possible to include natural rubber as the only component, in particular for applications in the tire body. Therefore, on the one hand, a method according to the invention is preferred, wherein the sulfur-crosslinkable rubber composition comprises natural polyisoprene in an amount in the range of 5 to 45 phr, preferably in the range of 10 to 25 phr. On the other hand, a method according to the invention is preferred, wherein the sulfur-crosslinkable rubber composition comprises natural polyisoprene or a combination of natural polyisoprene and synthetic polyisoprene in an amount of 80 phr or more, preferably of 90 phr or more, more preferably 95 phr or more, most preferably of about 100 phr.

When mixing the pretreated filler with the one or more diene rubber compounds for obtaining the sulfur-crosslinkable rubber composition, other components can be added as well. In this case, the pretreated filler is not only mixed with the diene rubber compounds but also with the other compounds. Herein, in principle, any order of mixing is possible, e.g. by adding and mixing all components sequentially with the rubber compounds. However, for most additional components it is preferred to mix them with the rubber compound before the addition of the pretreated filler or to mix the pretreated filler with the rubber compound before adding the additional component. Independent of the mixing sequence that is used, the skilled person understands that the sulfur-crosslinkable rubber composition comprises the respective additional components that are mixed with the pretreated filler in step c).

For some applications preferred is a method according to the invention, wherein in step c) the pretreated filler is additionally mixed with one or more plasticizers. Insofar, a method according to the invention is preferred, wherein the sulfur-crosslinkable rubber composition comprises one or more plasticizers, preferably in an amount in the range of 150 phr or less, more preferably 80 phr or less, most preferably 30 phr or less.

Furthermore, for some applications preferred is a method according to the invention, wherein in step c) the pretreated filler is additionally mixed with further additives, wherein the additives are preferably selected from the group consisting of aging stabilizers, activators, waxes, resins, mastification aids and processing aids. Insofar, a method according to the invention is preferred, wherein the sulfur-crosslinkable rubber composition comprises further additives, wherein the additives are preferably selected from the group consisting of aging stabilizers, activators, waxes, resins, mastification aids and processing aids, preferably in a combined amount in the range of 3 to 150 phr, more preferably in the range of 4 to 100 phr, most preferably in the range of 5 to 80 phr.

Relevant for most applications is a method according to the invention, wherein in step c) the pretreated filler is additionally mixed with a vulcanization system, typically as the last component added to the sulfur-crosslinkable rubber composition, wherein the vulcanization system preferably comprises at least one accelerator and elemental sulfur and/or at least one sulfur donor. Correspondingly, typical is a method according to the invention wherein the sulfur-crosslinkable rubber composition comprises a vulcanization system, wherein the vulcanization system preferably comprises at least one accelerator and elemental sulfur and/or at least one sulfur donor.

Due to the fact, that the use of the pretreated filler in the sulfur-crosslinkable rubber composition is beneficial, it is expedient to employ it in comparably large amounts. Preferred is a method according to the invention, wherein in step c) the pretreated filler is added in an amount in the range of 10 to 250 phr, preferably in the range of 20 to 180 phr, more preferably in the range of 30 to 150 phr, most preferably in the range of 40 to 90 phr. Correspondingly, a method according to the invention is preferred, wherein the sulfur-crosslinkable rubber composition comprises pretreated filler in an amount in the range of 10 to 250 phr, preferably in the range of 20 to 180 phr, more preferably in the range of 30 to 150 phr, most preferably in the range of 40 to 90 phr.

Correspondingly, in order to utilize the advantages of the pretreated filler, it is expedient to limit the amount of ordinary silica filler, wherein beneficially reduced amount of surface modifiers, e.g. coupling agents, are required, wherein the use of additional surface modifiers may even be completely unnecessary, at least for some applications. Therefore, for some applications a method according to the invention is preferred, wherein the sulfur-crosslinkable rubber composition comprises less than 20 phr, preferably less than 10 phr, more preferably less than 1 phr, most preferably less than 0.1 phr, of silica that is not a pretreated filler. Insofar, a method according to the invention is preferred for some applications, wherein in step c) the pretreated filler is not mixed with silica that is not a pretreated filler. Likewise, a method according to the invention is preferred, wherein the sulfur-crosslinkable rubber composition comprises less than 5 phr, preferably less than 1 phr, more preferably less than 0.1 phr, of a surface modifiers, preferably of a silane coupling agent. Correspondingly, a method according to the invention is preferred, wherein in step c) the pretreated filler is not mixed with surface modifiers, preferably not with a silane coupling agent.

For some applications a method according to the invention can be preferred, wherein the sulfur-crosslinkable rubber composition comprises less than 30 phr, preferably less than 5 phr, more preferably less than 1 phr, most preferably less than 0.1 phr, of carbon black. Insofar, a method according to the invention is preferred for some applications, wherein in step c) the pretreated filler is not mixed with carbon black.

The sulfur-crosslinkable rubber composition obtained with the method according to the invention can be cured and converted to a rubber product by means of vulcanization, wherein the skilled person in the field of rubber manufacturing is well familiar with the concept of vulcanization.

In view of this, the invention also relates to a method for producing a rubber product, the method comprising the steps of the method according to invention and the step:
d) vulcanizing the sulfur-crosslinkable rubber composition for producing a rubber product.

Herein, a method for producing a rubber product according to the invention is preferred, wherein the sulfur-crosslinkable rubber composition is vulcanized at a temperature in the range of 130 to 200 °C, preferably in the range of 130 to 180 °C.

The skilled person understands that the pretreated filler and the subprocess of obtaining the pretreated filler employed in the method according to the invention are beneficial themselves. Therefore, disclosed herein is a method for producing a pretreated filler for use in sulfur-crosslinkable rubber compositions, the method comprising the step of:
aa) producing or providing amorphous silicon dioxide,
and at least one of the steps of:
   bb1) modifying the surface of the amorphous silicon dioxide by contacting the amorphous silicon dioxide with a first vapor phase comprising a first reactant for obtaining an intermediate filler, and modifying the surface of the intermediate filler by subsequently contacting the intermediate filler with a vapor phase comprising comprising a second reactant for obtaining a pretreated filler, and/or
   bb2) modifying the surface of the amorphous silicon dioxide by contacting the amorphous silicon dioxide with a third vapor phase comprising a third reactant for obtaining a pretreated filler,
   wherein the first reactant is selected from the group consisting of compounds of formula I) with a boiling point of 300 °C or less:

      I) (R¹R²R³) Si - R⁴ - SH,
wherein R¹, R² and R³ are independently of each other linear or branched alkoxy groups or alkyl groups having 1 to 10 carbon atoms, wherein at least one of R¹, R² and R³ is an alkoxy group, wherein R⁴ is a linear or branched alkyl chain having 1 to 20 carbon atoms, wherein the second reactant is selected from the group consisting of organic compounds with a boiling point of 300 °C or less that are capable of forming a blocked mercapto group with the first reactant, and wherein the third reactant is selected from the group consisting of compounds with a boiling point of 300 °C or less that are obtainable by reacting the first reactant with the second reactant.

Also disclosed herein is a pretreated filler for use in sulfur-crosslinkable rubber compositions, obtained with the method disclosed herein.

Furthermore, disclosed herein is the use of a pretreated filler as disclosed herein, as filler in sulfur-crosslinkable rubber compositions for increasing the performance properties of rubber products obtained from said sulfur-crosslinkable rubber compositions.

The skilled person understands that the invention likewise relates to a sulfur-crosslinkable rubber composition, preferably obtained with the method according to the invention, comprising:
x) one or more diene rubber compounds, and
y) at least one pretreated filler, obtained with the method disclosed herein.

Likewise, the invention relates to a rubber product obtained with the method for producing a rubber product according to the invention and/or obtained through vulcanization of the sulfur-crosslinkable rubber composition according to the invention.

Herein, a rubber product according to the invention is preferred, wherein the rubber product is selected from the group consisting of tires, bellows, conveyor belts, air springs, cords, hoses and footwear soles, preferably tires, more preferably pneumatic tires, in particular vehicle tires, for example car tires.

Finally, disclosed herein is a reactor, preferably a fluidized bed reactor, for use in the method according to the invention, wherein the reactor comprises:
i) a reactor chamber, preferably a glass column,
ii) at least one bubbler, preferably a first bubbler and a second bubbler,
wherein the bubbler, preferably all bubblers, are connected with the reactor chamber through lines, wherein the reactor is configured so that a vapor phase that is generated in the bubbler can be provided to the reactor chamber via the lines.

In view of the above disclosure the skilled person understands that the present invention is also closely connected to a more general procedure of producing sulfur-crosslinkable rubber compositions with a broader range of first reactants. Correspondingly, disclosed herein as an aspect is a process for producing a sulfur-crosslinkable rubber composition, the process comprising the step of:
A) producing or providing amorphous silicon dioxide,
   at least one of the steps of:
   B1) modifying the surface of the amorphous silicon dioxide by contacting the amorphous silicon dioxide with a first vapor phase comprising a first reactant for obtaining an intermediate filler, and modifying the surface of the intermediate filler by subsequently contacting the intermediate filler with a vapor phase comprising a second reactant for obtaining a pretreated filler, and/or
   B2) modifying the surface of the amorphous silicon dioxide by contacting the amorphous silicon dioxide with a third vapor phase comprising a third reactant for obtaining a pretreated filler,
   and the step of:
   C) mixing the pretreated filler with one or more diene rubber compounds for obtaining the sulfur-crosslinkable rubber composition, wherein the first reactant is selected from the group consisting of compounds of formula I) with a boiling point of 300 °C or less:

   I) (R¹R²R³) Si - R⁴ - X,

   wherein R¹, R² and R³ are independently of each other linear or branched alkoxy groups or alkyl groups having 1 to 10 carbon atoms, wherein at least one of R¹, R² and R³ is an alkoxy group, wherein R⁴ is a linear or branched alkyl chain having 1 to 20 carbon atoms, wherein X is a polymerreactive functional group that is capable of forming a blocked mercapto group with the second reactant, preferably a thiol group,
   wherein the second reactant is selected from the group consisting of organic compounds with a boiling point of 300 °C or less that are capable of forming a blocked mercapto group with the first reactant, and
   wherein the third reactant is selected from the group consisting of compounds with a boiling point of 300 °C or less of formula I), wherein X is a blocked mercapto group, preferably of the structure S -(C=O)-R⁵, wherein R⁵ is a linear or branched alkyl group having 1 to 10 carbon atoms. Preferred embodiments of the disclosed process result from preferred embodiments of the method of the present invention.

Polymerreactive functional groups are e.g. disclosed in EP 2342088 A1, blocked mercapto groups are e.g. disclosed in EP 2094741 A1.

Hereinafter, the invention is described in more detail, wherein preferred embodiments of the invention are disclosed with respect to the attached figure. The figures show:
- Fig. 1: a schematic visualization of an exemplary reactor suitable for conducting the method according to the invention; and
- Fig. 2: a schematic visualization of the expected reaction mechanism in the method according to the invention in a preferred embodiment.

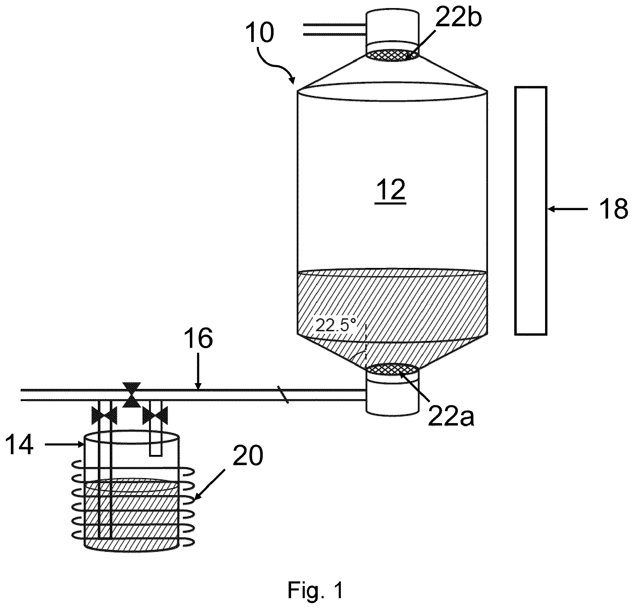

Fig. 1 depicts a schematic visualization of an exemplary reactor 10 suitable for conducting the method according to the invention.

The reactor 10 of fig. 1 is a laboratory scale fluidized bed reactor and comprises a reactor chamber 12, in which the silicon dioxide can be provided. In the example of fig. 1, the reactor 10 consists of a glass column (8 cm in internal diameter and 50 cm in height having conical shape), placed on top of a double-motor vibration table to assist the fluidization process. Two stainless-steel distributor plates 22a, 22b with pore size of 37 µm are placed at the bottom and top of the column to obtain a homogeneous distribution of the gas inside the column and to prevent particles from leaving the reactor chamber 12.

The reactor 10 comprises a stainless steel bubbler 14 that is connected with the reactor chamber 12 via a line 16. The bubbler 14 comprises a heating coil 20 for heating the liquid that is provided in the bubbler 14, wherein the reactor 10 comprises a second identical bubbler (not shown) to allow for use of the reactor 10 in a two stage process according to the invention. The reactor 10 comprises an IR-lamp 18 as a heating element for controlling the temperature in the reactor chamber 12 as well as heating elements for heating the line 16 that are not shown in fig. 1. The line 16 is connected to a nitrogen reservoir and the valves allow for bubbling nitrogen through the liquid in the bubbler 14 and to purge the line 16, respectively.

Hereinafter, the invention is also described in more detail by means of experiments.

### A. Preparation of pretreated filler

The pretreated filler was prepared in a two stage process using the reactor 10 of fig. 1. For this, 100 g of highly dispersible silica with a specific surface area measured by cetyl trimethyl-ammonium bromide (CTAB) adsorption of 177 m²/g (ULTRASIL^{®} 7005, Evonik AG, Germany) was employed as a substrate for the surface treatment in the reactor chamber 12. The glass column was heated up to about 200 °C by means of the IR-lamp 18.

3-Mercaptopropyl-triethoxysilane (MPTES, >80 % Sigma Aldrich) was selected as a first reactant for the first step of reaction for MLD treatment of the silica samples. The molecular weight of MPTES is 238.4 g/mol, and the boiling temperature is 210 °C. MPTES was kept in the stainless-steel bubbler 14 and heated up to 110 °C for increasing the vapor pressure of MPTES.

As a blocking agent, Octanoyl chloride (OC, 99 %, Sigma Aldrich) was selected as a second reactant for controlling the reactivity of mercapto groups by forming thioester reacted with -SH from MPTES. The molecular weight of octanoyl chloride is 162.7 g/mol, and the boiling temperature is 195 °C. The generated vapor pressure was 0.8 mbar at 20 °C. OC was kept in a second stainless-steel bubbler (not shown) and heated up to 110 °C for increasing the vapor pressure of OC.

Both reactants were carried into the reactor 10 by a 2 l/min of nitrogen flow (99.999 v/v%) passing through the bubblers. The lines 16 were heated to and kept at 130 °C to prevent condensation and under-delivery of the gaseous reactants.

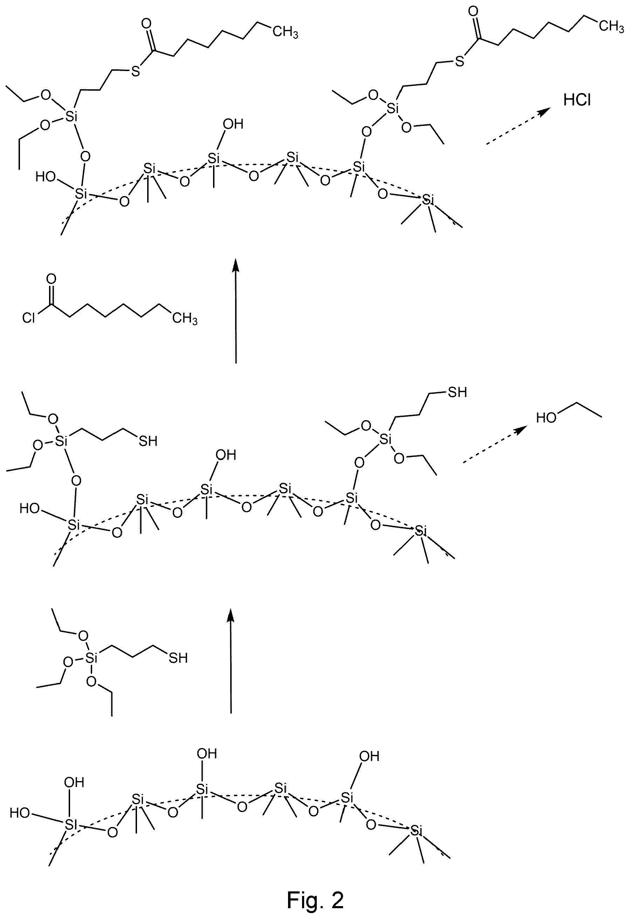

The MLD treatment of the silicon dioxide in the reactor chamber 12 started with a MPTES pulse of 120 min, followed by an OC pulse of 30 min through the fluidized bed, with nitrogen purging of 30 min between the pulses and at the end of the process. The expected reaction mechanism for the MPTES and OC reactions taking place during the MLD treatment are depicted in fig. 2.

B. Preparation of sulfur-crosslinkable rubber compositions Sulfur-crosslinkable rubber compositions were produced by a process customary in the rubber industry under standard conditions in two stages in a laboratory mixer, in which all the constituents apart from the vulcanization system (sulfur and vulcanization-influencing substances) were first mixed in the first mixing stage in a one or two stage process (base-mixing stage). By addition of the vulcanization system in the second stage (ready-mixing stage), the finished mixture was produced, with mixing at 90 to 120° C. The composition of the samples under study are summarized in Table 1.

**Table 1**

| Constituents | Unit | V1 | V2 | E1 | E2 |
|---|---|---|---|---|---|
| NR | phr | 10 | 10 | 10 | 10 |
| BR | phr | 18 | 18 | 18 | 18 |
| SSBR | phr | 72 | 72 | 72 | 72 |
| Silica (untreated) | phr | 50 | 70 | | |
| Silica (pretreated) | phr | | | 52.8 | 73.9 |
| TDAE | phr | 12 | 12 | 12 | 12 |
| 6PPD | phr | 2 | 2 | 2 | 2 |
| Ozone wax | phr | 2 | 2 | 2 | 2 |
| ZnO | phr | 2,5 | 2,5 | 2,5 | 2,5 |
| Stearic acid | phr | 2.5 | 2.5 | 2.5 | 2.5 |
| Silan | phr | 4.1 | 7.1 | - | - |
| DPG | phr | 2 | 2 | 2 | 2 |
| CBS | phr | 2 | 2 | 2 | 2 |
| Sulfur | phr | 2 | 2 | 2 | 2 |

Herein the difference in phr for the silica content between V1 and E1 as well as V2 and E2, respectively, is made to take into account the weight increase of the pretreated filler that results from the modification.

The components used in the above sulfur-crosslinkable rubber compositions are summarized in Table 2.

**Table 1**

| Constituents | Type |
|---|---|
| NR | Natural polyisoprene; NR TSR |
| BR | Butadiene rubber; Europrene Beocis BR 40, Fa. Polimeri |
| SSBR | Solution-polymerized styrene-butadiene rubber; NS116, Fa. Zeon |
| Silica (untreated) | Silica; Ultrasil 7005, Fa Evonik |
| Silica (pretreated) | Pretreated filler produced according to item A |
| TDAE | Treated distillate aromatic extracted |
| 6PPD | N-(1,3-Dimethylbutyl)-N'-phenyl-p-phenylendiamin |
| Silan | NXT, Fa. Momentive; (Silan content > 90 wt.-%) |
| DPG | Diphenyl Guanidine |
| CBS | N-Cyclohexyl-2-benzothiazole sulfenamide |

The sulfur-crosslinkable rubber compositions were used to produce test specimens by vulcanization after t95 - t100 (measured using a Moving Disc Rheometer according to ASTM D 5289-12/ ISO 6502) under pressure at a temperature in the range of 160 to 170 °C. These test specimens were used to determine material properties that are typical for the rubber industry by the test methods specified hereinafter:
- Shore A hardness at room temperature and 70 °C according to ISO 868:2003 after conditioning the samples ten times at MPa in analogy to DIN ISO 7619-1;
- rebound resilience at room temperature according to ISO 4662:2017;
- loss factor tangens delta max at 70 °C according to DIN 53513:1990-03; and
- abrasion at room temperature according to DIN ISO 4649:2021

The results obtained for the sulfur-vulcanized rubber compositions, are summarized in Table 3.

**Table 3**

| Parameter | Unit | V1 | V2 | E1 | E2 |
|---|---|---|---|---|---|
| Shore A (RT) | ShA | 64.1 | 71.4 | 65.6 | 74.7 |
| Shore A (70 °C) | ShA | 62.4 | 69 | 62.9 | 70.4 |
| Resilience (RT) | % | 41.4 | 33.9 | 38.5 | 30.2 |
| Tan delta (70°C) | - | 0.068 | 0.094 | 0.060 | 0.091 |
| Abrasion (RT) | mm³ | 150 | 130 | 133 | 115 |

From the above data it is apparent to the skilled person, that the sulfur-crosslinkable rubber compositions according to the invention result in rubber products that solve the trade-off between rolling resistance and wet grip in a favorable way as indicated by the improved resilience and Tan delta. Likewise, the rubber products show increased performance with respect to the abrasion. At the same time, unlike for prior art pretreated filler, the sulfur-crosslinkable rubber compositions according to the invention result in rubber products that show only minor increases in hardness and exhibit excellent processability with a low level of scorch.

### Reference Signs

- 10: Reactor
- 12: Reactor chamber
- 14: Bubbler
- 16: Line
- 18: IR-Lamp
- 20: Heating coil
- 22a-b: Distributor plates

## Claims

1. Method for producing a sulfur-crosslinkable rubber composition, the method comprising the step of:
a) producing or providing amorphous silicon dioxide,
at least one of the steps of:
b1) modifying the surface of the amorphous silicon dioxide by contacting the amorphous silicon dioxide with a first vapor phase comprising a first reactant for obtaining an intermediate filler, and modifying the surface of the intermediate filler by subsequently contacting the intermediate filler with a vapor phase comprising a second reactant for obtaining a pretreated filler, and/or
b2) modifying the surface of the amorphous silicon dioxide by contacting the amorphous silicon dioxide with a third vapor phase comprising a third reactant for obtaining a pretreated filler,
and the step of:
c) mixing the pretreated filler with one or more diene rubber compounds for obtaining the sulfur-crosslinkable rubber composition,
wherein the first reactant is selected from the group consisting of compounds of formula I) with a boiling point of 300 °C or less:
I) (R¹R²R³) Si - R⁴ - SH,
wherein R¹, R² and R³ are independently of each other linear or branched alkoxy groups or alkyl groups having 1 to 10 carbon atoms, wherein at least one of R¹, R² and R³ is an alkoxy group, wherein R⁴ is a linear or branched alkyl chain having 1 to 20 carbon atoms,
wherein the second reactant is selected from the group consisting of organic compounds with a boiling point of 300 °C or less that are capable of forming a blocked mercapto group with the first reactant, and
wherein the third reactant is selected from the group consisting of organic compounds with a boiling point of 300 °C or less that are obtainable by reacting the first reactant with the second reactant by forming a blocked mercapto group.

2. Method according to claim 1, wherein the method comprises step b1).

3. Method according to any one of claims 1 or 2, wherein the amorphous silicon dioxide has specific surface area measured by cetyl trimethyl-ammonium bromide (CTAB) adsorption according to ISO 5794-1G:2010 in the range of 60 to 350 m²/g.

4. Method according to any one of claims 1 to 3, wherein in formula I) R¹, R² and R³ are independently of each other linear or branched alkoxy groups having 1 to 5 carbon atoms and/or wherein in formula I) R⁴ is a linear or branched alkyl chain having 1 to 10 carbon atoms.

5. Method according to claim 4, wherein the first reactant is selected from the group consisting of 3-Mercaptopropyl-triethoxysilane and Mercaptopropyl-trimethoxysilane.

6. Method according to any one of claims 1 to 5, wherein the second reactant is selected from the group consisting of acyl halides, carboxylic acids and carboxylic acid anhydrides, wherein the second reactant is preferably selected from the group consisting of acyl halides and carboxylic acids of the formula II):
II) R⁵ - (C=O) - Y,
wherein R⁵ is a linear or branched alkyl group having 1 to 20 carbon atoms, and wherein Y is selected from the group of halides and hydroxy.

7. Method according to claim 6, wherein the second reactant is selected from the group consisting of acyl halides.

8. Method according to any one of claims 1 to 7, wherein the sulfur-crosslinkable rubber composition comprises pretreated filler in an amount in the range of 10 to 250 phr.

9. Method according to any one of claims 1 to 8, wherein the sulfur-crosslinkable rubber composition comprises less than 5 phr of a surface modifier.

10. Method according to any one of claims 1 to 9, wherein the sulfur-crosslinkable rubber composition comprises less than 20 phr of silica that is not pretreated filler.

11. Method according to any one of claims 1 to 10, wherein steps b1) and/or b2) are conducted in a reactor (10), preferably a fluidized bed reactor.

12. Method according to any one of claims 1 to 11, wherein during steps b1) and/or b2), the reactor (10) is heated to a temperature in the range of 150 to 300 °C.

13. Method for producing a rubber product, the method comprising the steps of the method according to any one of claim 1 to 12 and the step:
d) vulcanizing the sulfur-crosslinkable rubber composition for producing a rubber product.

14. Sulfur-crosslinkable rubber composition, preferably obtained with the method according to any one of claim 1 to 12, comprising:
x) one or more diene rubber compounds, and
y) at least one pretreated filler, obtained with a method comprising the step of:
aa) producing or providing amorphous silicon dioxide,
and at least one of the steps of:
bb1) modifying the surface of the amorphous silicon dioxide by contacting the amorphous silicon dioxide with a first vapor phase comprising a first reactant for obtaining an intermediate filler, and modifying the surface of the intermediate filler by subsequently contacting the intermediate filler with a vapor phase comprising a second reactant for obtaining a pretreated filler, and/or
bb2) modifying the surface of the amorphous silicon dioxide by contacting the amorphous silicon dioxide with a third vapor phase comprising a third reactant for obtaining a pretreated filler,
wherein the first reactant is selected from the group consisting of compounds of formula I) with a boiling point of 300 °C or less:
I) (R¹R²R³) Si - R⁴ - SH,
wherein R¹, R² and R³ are independently of each other linear or branched alkoxy groups or alkyl groups having 1 to 10 carbon atoms, wherein at least one of R¹, R² and R³ is an alkoxy group, wherein R⁴ is a linear or
branched alkyl chain having 1 to 20 carbon atoms, wherein the second reactant is selected from the group consisting of organic compounds with a boiling point of 300 °C or less that are capable of forming a blocked mercapto group with the first reactant, and wherein the third reactant is selected from the group consisting of organic compounds with a boiling point of 300 °C or less that are obtainable by reacting the first reactant with the second reactant by forming a blocked mercapto group.

15. Rubber product, preferably tire, obtained with the method according to claim 13 and/or obtained through vulcanization of the sulfur-crosslinkable rubber composition according to claim 14.
